# EUROPEAN PATENT SPECIFICATION

(11) **EP 3 812 134 B1**
(45) Date of publication and mention of the grant of the patent: **29.06.2022**
(21) Application number: 19810523.1
(22) Date of filing: 24.05.2019
(51) Int. Cl.: B29C 64/386, B29C 64/393, B33Y 50/00

(54) **LAYER-THICKNESS VARIABLE SLICING METHOD, 3D PRINTING METHOD AND 3D PRINTED PRODUCT**
SLICING-VERFAHREN MIT UNTERSCHIEDLICHER SCHICHTDICKE, 3D-DRUCKVERFAHREN UND 3D-GEDRUCKTES PRODUKT
PROCÉDÉ DE TRANCHAGE À ÉPAISSEUR DE COUCHE VARIABLE, PROCÉDÉ D'IMPRESSION 3D ET PRODUIT IMPRIMÉ EN 3D

(30) Priority: 31.05.2018 CN 201810546163
(43) Date of publication of application: 28.04.2021
(73) Proprietor: Kocel Intelligent Machinery Limited, Yinchuan, Ningxia 750021 (CN)
(72) Inventor: PENG, Fan, Beijing West Road, Xixia District Yinchuan, Ningxia 750021 (CN); LIU, Yi, Beijing West Road, Xixia District Yinchuan, Ningxia 750021 (CN); ZHOU, Zhijun, Beijing West Road, Xixia District Yinchuan, Ningxia 750021 (CN)
(74) Representative: De Clercq & Partners
(86) International application number: PCT/CN2019/088402
(87) International publication number: WO 2019/228278

(56) References cited:
- WO-A1-2014/020801
- WO-A2-2010/003883
- CN-A- 103 934 569
- CN-A- 104 503 711
- CN-A- 104 708 824
- CN-A- 106 547 969
- CN-A- 106 671 422
- CN-A- 106 915 076
- CN-A- 107 336 433
- CN-A- 108 995 219
- JP-A- H10 202 756
- JP-A- 2018 012 227
- JP-B1- 3 970 914
- US-A- 5 596 504
- US-A- 5 721 600

## Description

### Cross-reference to Related Application

The present disclosure claims the priority to Chinese patent application with the filing number 201810546163.8 filed on May 31, 2018 with the Chinese Patent Office and entitled "Layer-Thickness Variable Slicing Method, 3D Printing Method and 3D Printed Product".

### Technical Field

The present disclosure relates to the technical field of additive manufacturing, and in particular, to a layered slicing method with variable layer thickness and a 3D printing method thereof.

### Background Art

3D printing originated in the United States at the end of the 19th century, and is also known as three-dimensional printing or rapid prototyping technology. Due to constraints of technical conditions at the time, it did not get further development and promotion until the 1980s. After decades of development and continuous improvement, 3D printing technology has developed, from the earliest photo-curing process, to various processes for making rapid prototyping products such as the fused deposition molding process (FDM process), the selective laser sintering technology (SLS process) and three-dimensional printing process (3DP process). In the above, the 3D printing technology using the laser sintering technology and the fused deposition molding technology can directly produce various parts from computer graphics data because it does not require machining or any molds, thereby saving production costs and research and development time, and substantially improving producing efficiency. Therefore, it has been widely used in many fields such as mechanical parts, jewelry molds, customized products and medical organs. JPH10202756A relates to a data preparing method for 3-D lithography, comprising forming a desired three dimensional shape by stacking a plurality of light curing layers formed by irradiating light to a photosetting resin or a plurality of thin plates, slicing the three dimensional shape data so that the formation step of the three dimensional shape data is inconspicuous and preparing a plurality of cross-sectional contour line data.

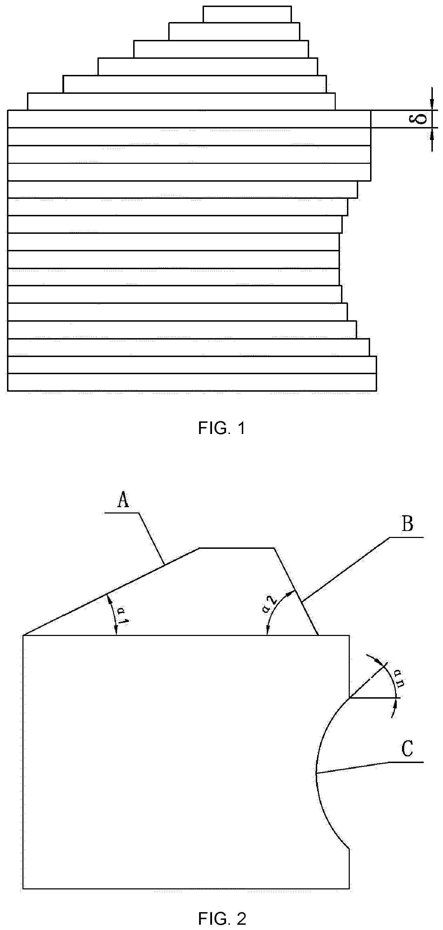

The common characteristic of the above types of 3D printing is a technology based on digital three-dimensional model files, wherein the three-dimensional model is cut into several layers of slices according to a certain layer thickness by means of slicing technology, and the three-dimensional solid is converted into a stack of several layers of two-dimensional printed slices, and adhesive materials such as powder-like metals or plastics are used to build objects by means of layered printing. The layer thickness of the slice is a critical parameter for 3D printing, which has a great impact on printing efficiency, printing accuracy, surface quality and the like. Since the essence of 3D printing is the overlaying of several slices of certain thickness, a "step effect" will be formed on the boundary. For the slices in the prior art, the thickness of each layer of a slice is generally fixed, as shown in FIG. 1. Theoretically, the thinner the layer thickness δ of the slice is, the finer the printed objects is and the higher the accuracy is, yet the lower the efficiency is and the higher the cost is. In order to pursue high efficiency and low cost, the slice thickness can be increased, but after the slices are layered by the same thickness, the "step effect" becomes severe on those parts with a large slope on the outer profile after printing, which significantly reduces the surface quality and accuracy. At present, various types of 3D printing technologies and devices on the market weigh the relationship between the above factors when printing specific objects, using the best and single layer thickness for slicing and printing, which cannot fully utilize the efficiency and accuracy of the devices.

### Summary

Aiming at the requirements of a single fixed layer-thickness slicing and printing method in the prior art, as well as the requirements of printing efficiency and accuracy, the present disclosure provides a layer-thickness variable slicing method for three-dimensional model, to address the above problems.

The purpose of the present disclosure is realized as follows, a layer-thickness variable slicing method for three-dimensional model according to claim 1.

With respect to the layer-thickness variable slicing method for three-dimensional model of the present disclosure, when performing three-dimensional model slicing, different layer thicknesses of the slice are set according to the slope angles of different positions of outer profile with respect to the slicing direction, and in order to reduce the "step effect" caused by the slicing of non-vertical profile parts, the parts where the contour of the three-dimensional model are vertical surface are set with a slightly thicker slice thickness, so as to improve efficiency while meeting the quality accuracy; and the slice thicknesses of the parts are reduced where the inner and outer profiles of the three-dimensional model are inclined surface or curved surface, so as to ensure good surface quality and accuracy. The method of the present disclosure realizes the double guarantee of efficiency and quality in 3D printing by making a three-dimensional solid be cut into multiple slices of different thicknesses, thereby greatly improving the printing efficiency of the equipment, reducing printing costs, and securing the promotion of the industrial application of 3D printing in various fields.

For the purpose of accurately determining a function relationship between a slope angle and a layer thickness of the slice, the function relationship between the minimum value αₘᵢₙ of the slope angles and the layer thickness δ of the slice is δ = k * sinαₘᵢₙ , where k ranges from 0.1 to 1. The higher the quality requirement of printing is, the smaller the value of k is. The method comprises the above-mentioned layer-thickness variable slicing method and a control process for layered printing by inputting a slice file into a 3D printing device.

The control process for layered printing in the above printing method of the present disclosure comprises the following steps in sequence:
importing the file of layer-thickness variable slice into a printing control component of the 3D printing device,
wherein the printing control component adjusts the lifting distance of a work surface, the amount of material spread by a material spreading device and the amount of forming agent of an inkjet device, to print the current layer, according to slice data of each layer of a slice file, until the printing of the entire product is completed.

In order to further facilitate the adjustment of the amount of material spread, the amount of material spread by the material spreading device is adjusted by adjusting the walking speed of the material spreading device, the vibration frequency of the material spreading device, the amplitude of the material spreading device and/or the discharge diameter of the material spreading device.

In order to further facilitate the adjustment of the amount of inkjet, the adjustment of the amount of the forming agent of the inkjet device is realized by adjusting the walking speed, the ejection frequency, the ejection voltage and the resolution of the inkjet device.

The present disclosure also provides a 3D printed product printed by using the above-mentioned layer-thickness variable 3D printing method. After the product is layered and sliced according to the above-mentioned layer-thickness variable slicing method, it is 3D printed wherein the layer-thickness is changed according to the sliced layer thickness. The surface quality of the product is fine, and there is no step effect visible to the naked eye.

The last object of the present disclosure is to provide a 3D printing device comprising a control component configured for implementing the above-mentioned layer-thickness variable 3D printing method.

### Brief Description of Drawings

FIG. 1 is a schematic sectional view of a model after a fixed layer-thickness slicing process in the prior art.
FIG. 2 is a schematic sectional profile view perpendicular to the slicing direction.
FIG. 3 is a schematic sectional view of a model being sliced by means of the layer-thickness variable slicing method for three-dimensional model of the present disclosure.
FIG. 4 is a flowchart of the layer-thickness variable 3D printing method in the present disclosure.

### Detailed Description of Embodiments

### Embodiment 1

The layer-thickness variable slicing method for three-dimensional model of the present embodiment is used in the slicing of three-dimensional model for 3D printing of product, specifically comprises the following steps.

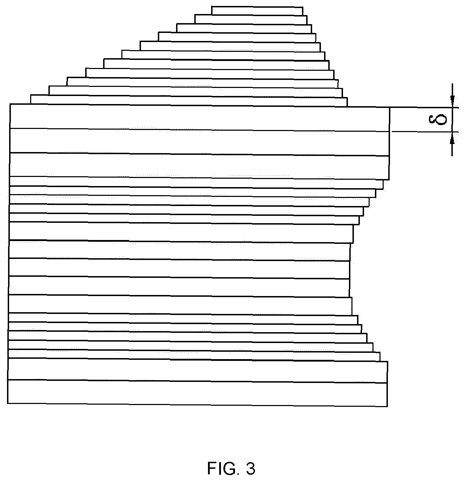

First, a three-dimensional model of the product is input into a three-dimensional slicing software. The three-dimensional slicing software analyzes and recognizes the slope angle of each slicing position on inner and outer profiles of a three-dimensional model with respect to a slicing direction, and at the same slicing position, the minimum value αₘᵢₙ of every slope angle α is used as a basis to determine the layer thickness of the current slice; as shown in FIG. 2 is the outer profile of one of the sections of the three-dimensional model perpendicular to the slicing direction, and the slicing direction of the three-dimensional model is horizontal, and with respect to the outer profiles in the figure, the slope angles of the profile A and the profile B relative to the slicing direction are α1 and α2, respectively, the minimum slope angle in the section direction is α1, and at this position, the minimum value αₘᵢₙ is determined as 27° by comparing α1 with the three-dimensional model's other minimum slope angles αi of the sections perpendicular to the slicing direction, that is, the minimum slope angle, which is used as basis for determining the layer thickness of the slice for the current position corresponding to the profile A and the profile B, αₘᵢₙ = 27°; similarly, the slice thickness where the profile C is located is corresponding to an arc-shaped section, and within the slice thickness range where the arc-shaped section is located, the minimum slope angle decreases gradually between αₙ=45° and 90°, and here it needs to be determined layer by layer according to the minimum slope angle of the current profile position when determining the minimum slope angle αₘᵢₙ of each slice layer position; then, the thickness of each slice layer is determined respectively according to the minimum slope angle αₘᵢₙ corresponding to each profile and the formula δ = k * sinαₘᵢₙ, where the value of k is 0.5, δ = 0.5*sin27° = 0.23mm, and so the layer thickness of the slice of the part of the three-dimensional model corresponding to the profile A and profile B is sliced at 0.23, and other parts with a slope angle of 90° are sliced at a layer thickness of δ = 0.5mm; as for the slices within the height range of the slice layer of the three-dimensional model corresponding to the profile C, from the upper edge of the arc-shaped profile to the position of the height where the central slope angle is 90°, and the layer thickness of the slice increases gradually from δ=0.5*sin45°=0.35mm∼0.5mm, and then the layer thickness of the slice decreases gradually from 0.5mm to 0.35mm from the center to the lower edge, and so far, the layer thickness of the slice corresponding to each slice position of the three-dimensional model have been determined; finally, the three-dimensional model is sliced according to the layer thickness of the slice of each slice position determined by the above process, and the slicing result is shown in FIG. 3, and the slice data is stored as layer-thickness variable slice file of .cli format, and then the slice file of .cli format is converted into a slice file of the .bmp format.

With respect to the layer-thickness variable slicing method for three-dimensional model of the present disclosure, when performing three-dimensional model slicing, different layer thicknesses of the slice are set according to the slope angles of different positions of outer profile with respect to the slicing direction, and in order to reduce the "step effect" caused by the slicing of non-vertical profile parts, the parts where the contour of the three-dimensional model are vertical surface are set with a slightly thicker slice thickness, so as to improve efficiency while meeting the quality accuracy; and the slice thicknesses of the parts are reduced where the inner and outer profiles of the three-dimensional model are inclined surface or curved surface, so as to ensure good surface quality and accuracy. The method of the present disclosure realizes the double guarantee of efficiency and quality in 3D printing by the slicing method making a single three-dimensional solid be cut into multiple variable layer thicknesses, thereby greatly improving the printing efficiency of the equipment, reducing printing costs, and securing the promotion of the industrial application of 3D printing in various fields.

### Embodiment 2

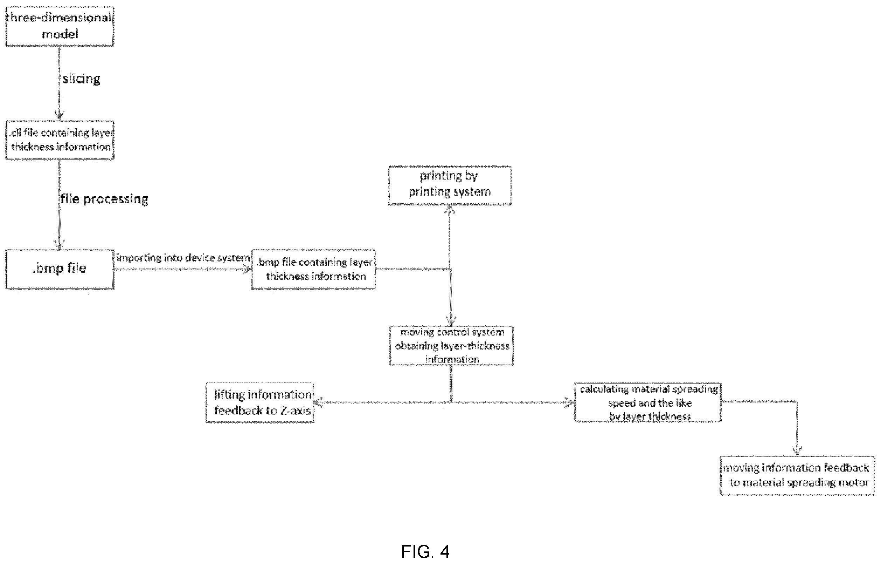

This embodiment continues to perform a layer-thickness variable 3D printing method on the basis of Embodiment 1. As shown in FIG. 4, the specific process wherein the slice file of .bmp format obtained in the Embodiment 1 is input into a 3D printing device for layered printing control is as follows.

The first step is to import the layer-thickness variable slice file of .bmp format obtained in the embodiment into the printing control component of the 3D printing device.

In the second step, the printing control component adjusts the lifting distance of a work surface, the amount of material spread by a material spreading device and the amount of forming agent of an inkjet device, to print the current layer, according to slice data of each layer of a slice file, until the printing of the entire product is completed; in this step, in order to further facilitate the adjustment of the amount of material spread, the amount of material spread by a material spreading device is adjusted by adjusting the walking speed of the material spreading device, the vibration frequency of the material spreading device, the amplitude of the material spreading device and/or the discharge diameter of the material spreading device; in order to further facilitate the adjustment of the amount of inkjet, the adjustment of the amount of the forming agent of the inkjet device is realized by adjusting the walking speed, the ejection frequency, the ejection voltage and the resolution of the inkjet device.

The product printed by the 3D printing method of this embodiment has a fine surface quality and has no step effect visible to the naked eye.

The above-mentioned layer-thickness variable slicing method and printing method for three-dimensional model of the present disclosure are suitable for slicing control technology of 3DP powder printing, FDM fused deposition molding printing and sintering technology, and SLS selective laser sintering technology for various industrial products.

## Claims

1. A layer-thickness variable slicing method, applicable for layered slicing of a three-dimensional model for 3D printing of a product, **characterized by** comprising the following steps:
for each section of the three-dimensional model perpendicular to a slicing direction, analyzing and identifying a slope angle α, at each slicing position, of each of inner and outer profiles of the three-dimensional model with respect to a slicing direction, and determining a minimum value αₘᵢₙ in slope angles α at the same slicing position;
determining a layer thickness of each slice corresponding to each slicing position according to a function relationship between the minimum value αₘᵢₙ of the slope angles and the layer thickness δ of the slice, δ = k * sinαₘᵢₙ, where k ranges from 0.1 to 1, wherein the higher a quality requirement of printing is, the smaller a value of k is; and
determining a layer thickness of each slice corresponding to each position of the three-dimensional model of an entire product.

2. A layer-thickness variable 3D printing method, **characterized by** comprising the layer-thickness variable slicing method according to claim 1 and a control process, wherein the control process comprises following steps:
importing a file of layer-thickness variable slice into a printing control component of a 3D printing device,
wherein the printing control component adjusts, according to slice data of each layer of a slice file, a lifting distance of a work surface, an amount of material spread by a material spreading device and an amount of forming agent of an inkjet device, to print a current layer, until a printing of an entire product is completed.

3. The layer-thickness variable 3D printing method according to claim 2, wherein the amount of the material spread by the material spreading device is adjusted by adjusting a walking speed of the material spreading device, a vibration frequency of the material spreading device, an amplitude of the material spreading device and/or a discharge diameter of the material spreading device.

4. The layer-thickness variable 3D printing method according to claim 2, wherein the amount of the forming agent of the inkjet device is adjusted by adjusting a walking speed, an ejection frequency, an ejection voltage and a resolution of the inkjet device.

5. A 3D printing device with means for layer-thickness variable printing, **characterized in that** the 3D printing device is provided with a control component configured for implementing the layer-thickness variable 3D printing method according to any one of claims 2-4.

## Patentansprüche

1. Slicing-Verfahren mit unterschiedlicher Schichtdicke, das zum geschichteten Slicing eines dreidimensionalen Modells zum 3D-Drucken eines Produkts anwendbar ist, **dadurch gekennzeichnet, dass** es die folgenden Schritte umfasst:
für jeden Abschnitt des dreidimensionalen Modells senkrecht zu einer Slicing-Richtung, Analysieren und Identifizieren eines Steigungswinkels α an jeder Slicing-Position jeweils des Innen- und Außenprofils des dreidimensionalen Modells in Bezug auf eine Slicing-Richtung, und Bestimmen eines Minimalwerts αₘᵢₙ unter Steigungswinkeln α an der gleichen Slicing-Position;
Bestimmen einer Schichtdicke jedes Slice entsprechend jeder Slicing-Position gemäß einer Funktionsbeziehung zwischen dem Minimalwert αₘᵢₙ der Steigungswinkel und der Schichtdicke δ des Slice, δ = k * sinαₘᵢₙ, wobei k im Bereich von 0,1 bis 1 liegt, wobei je höher eine Druckqualitätsanforderung ist, desto kleiner ein Wert von k ist; und
Bestimmen einer Schichtdicke jedes Slice entsprechend jeder Position des dreidimensionalen Modells eines gesamten Produkts.

2. 3D-Druckverfahren mit unterschiedlicher Schichtdicke, **dadurch gekennzeichnet, dass** es das Slicing-Verfahren mit unterschiedlicher Schichtdicke nach Anspruch 1 und einen Steuerungsprozess umfasst, wobei der Steuerungsprozess folgende Schritte umfasst:
Importieren einer Datei aus Slices mit unterschiedlicher Schichtdicke in eine Drucksteuerungskomponente einer 3D-Druckvorrichtung,
wobei die Drucksteuerungskomponente gemäß Slice-Daten jeder Schicht einer Slice-Datei eine Hebestrecke einer Arbeitsoberfläche, eine Materialmenge, die durch eine Materialverteilungsvorrichtung verteilt wird, und eine Formmittelmenge einer Tintenstrahldruckvorrichtung einstellt, um eine aktuelle Schicht zu drucken, bis ein Drucken eines gesamten Produkts abgeschlossen ist.

3. 3D-Druckverfahren mit unterschiedlicher Schichtdicke nach Anspruch 2, wobei die Menge, des Materials, das durch die Materialverteilungsvorrichtung verteilt wird, durch Einstellen einer Laufgeschwindigkeit der Materialverteilungsvorrichtung, einer Schwingungsfrequenz der Materialverteilungsvorrichtung, einer Amplitude der Materialverteilungsvorrichtung und/oder einen Abgabedurchmesser der Materialverteilungsvorrichtung eingestellt wird.

4. 3D-Druckverfahren mit unterschiedlicher Schichtdicke nach Anspruch 2, wobei die Formmittelmenge der Tintenstrahldruckvorrichtung durch Einstellen einer Laufgeschwindigkeit, einer Ausstoßfrequenz, einer Ausstoßspannung und einer Auflösung der Tintenstrahldruckvorrichtung eingestellt wird.

5. 3D-Druckvorrichtung mit einem Mittel zum Drucken mit unterschiedlicher Schichtdicke, **dadurch gekennzeichnet, dass** die 3D-Druckvorrichtung mit einer Steuerungskomponente versehen ist, die zum Implementieren des 3D-Druckverfahrens mit unterschiedlicher Schichtdicke nach einem der Ansprüche 2 bis 4 eingerichtet ist.

## Revendications

1. Procédé de tranchage à épaisseur de couche variable, applicable au tranchage en couches d'un modèle tridimensionnel pour l'impression 3D d'un produit, **caractérisé en ce qu'**il comprend les étapes suivantes :
pour chaque section du modèle tridimensionnel perpendiculaire à une direction de tranchage, analyse et identification d'un angle d'inclinaison **a,** à chaque position de tranchage, de chacun des profils interne et externe du modèle tridimensionnel par rapport à une direction de tranchage, et détermination d'une valeur minimale **α**ₘᵢₙ des angles d'inclinaison α à la même position de tranchage ;
détermination d'une épaisseur de couche de chaque tranche correspondant à chaque position de tranchage en fonction d'une relation fonctionnelle entre la valeur minimale αₘᵢₙ des angles d'inclinaison et l'épaisseur de couche δ de la tranche, δ = k * sin αₘᵢₙ, où k est compris dans la plage de 0,1 à 1, dans lequel plus une exigence de qualité d'impression est élevée, plus une valeur de k est petite ; et
détermination d'une épaisseur de couche de chaque tranche correspondant à chaque position du modèle tridimensionnel d'un produit entier.

2. Procédé d'impression 3D à épaisseur de couche variable, **caractérisé en ce qu'**il comprend le procédé de tranchage à épaisseur de couche variable selon la revendication 1 et un processus de contrôle, le processus de contrôle comprenant les étapes suivantes :
importation d'un fichier de tranche d'épaisseur de couche variable dans un composant de contrôle d'impression d'un dispositif d'impression 3D,
dans lequel le composant de contrôle d'impression règle, en fonction de données de tranche de chaque couche d'un fichier de tranche, une distance de levage d'une surface de travail, une quantité de matière étalée par un dispositif d'étalement de matière et une quantité d'agent de formation d'un dispositif à jet d'encre, pour imprimer une couche en cours, jusqu'à ce qu'une impression d'un produit entier soit achevée.

3. Procédé d'impression 3D à épaisseur de couche variable selon la revendication 2, dans lequel la quantité de la matière étalée par le dispositif d'étalement de matière est réglée par réglage d'une vitesse d'avance du dispositif d'étalement de matière, d'une fréquence de vibration du dispositif d'étalement de matière, d'une amplitude du dispositif d'étalement de matière et/ou d'un diamètre de décharge du dispositif d'étalement de matière.

4. Procédé d'impression 3D à épaisseur de couche variable selon la revendication 2, dans lequel la quantité de l'agent de formation du dispositif à jet d'encre est réglée par réglage d'une vitesse d'avance, d'une fréquence d'éjection, d'une tension d'éjection et d'une résolution du dispositif à jet d'encre.

5. Dispositif d'impression 3D avec des moyens d'impression à épaisseur de couche variable, **caractérisé en ce que** le dispositif d'impression 3D est pourvu d'un composant de contrôle configuré pour mettre en œuvre le procédé d'impression 3D à épaisseur de couche variable selon l'une quelconque des revendications 2 à 4.
